(19) Europäisches Patentamt
European Patent Office
Office européen des brevets

(11) EP 0 658 361 B1

(12) EUROPÄISCHE PATENTSCHRIFT

(45) Veröffentlichungstag und Bekanntmachung des Hinweises auf die Patenterteilung:
**09.04.1997 Patentblatt 1997/15**

(51) Int. Cl.$^6$: **B01D 19/04**

(21) Anmeldenummer: **94119090.2**

(22) Anmeldetag: **03.12.1994**

(54) **Entschäumeremulsion auf der Basis organofunktionell modifizierter Polysiloxane**

Defoaming emulsion on the basis of organofunctional modified organopolysiloxanes

Emulsion anti-mousse à base d'organopolysiloxanes modifiés à fonctions organiques

(84) Benannte Vertragsstaaten:
**AT BE CH DE DK ES FR GB GR IE IT LI LU NL PT SE**

(30) Priorität: **17.12.1993 DE 4343185**

(43) Veröffentlichungstag der Anmeldung:
**21.06.1995 Patentblatt 1995/25**

(73) Patentinhaber: **Th. Goldschmidt AG**
**D-45127 Essen (DE)**

(72) Erfinder:
- **Keup, Michael, Dr.**
**D-45130 Essen (DE)**
- **Sucker, Roland**
**D-59368 Werne (DE)**

(56) Entgegenhaltungen:

| | |
|---|---|
| **EP-A- 0 036 597** | **EP-A- 0 257 356** |
| **EP-A- 0 436 791** | **US-A- 3 984 347** |
| **US-A- 4 028 218** | **US-A- 5 244 599** |

Bemerkungen:

Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 658 361 B1

Printed by Rank Xerox (UK) Business Services
2.14.2/3.4

## Beschreibung

Die Erfindung betrifft Entschäumeremulsionen auf der Basis organofunktionell modifizierter Polysiloxane mit einem Gehalt an unterschiedlich modifizierten Organopolysiloxanen. Die Erfindung betrifft insbesondere auch solche Emulsionen, die mit feinstteiliger Kieselsäure gefüllt sind.

Die Verwendung von Methylpolysiloxanen zur Entschäumung von Flüssigkeiten gehört zu einem der ersten Anwendungsgebiete dieser Produkte. Es gibt eine Vielzahl von Veröffentlichungen und Patentschriften, in denen die Wirkungsweise der Siloxane beschrieben ist und Hinweise für die Auswahl der geeigneten Siloxane und ihrer Zubereitungsformen gegeben werden. Schon frühzeitig hat man erkannt, daß die Verwendung von Mischungen unterschiedlicher Polysiloxane von Vorteil sein kann. Hierzu wurde auch eine große Anzahl unterschiedlich organofunktionell modifizierter Polysiloxane entwickelt. Eine typische organofunktionelle, die Eigenschaften der Polysiloxane modifizierende Gruppe ist die Polyethergruppe mit Oxyethylen- und/oder Oxypropylen-Einheiten, wobei im Lauf der weiteren Entwicklung Polysiloxane mit Kombinationen von Polyethergruppen unterschiedlicher Hydrophilie zur Modifizierung verwendet wurden. Ein weiterer wichtiger Bestandteil solcher Entschäumeremulsionen auf Polysiloxanbasis ist feinstteilige, meist pyrogen erzeugte Kieselsäure, die gegebenenfalls in hydrophobierter Form eingesetzt wird.

Aus der Vielzahl der Entschäumer auf Polysiloxan-Basis betreffenden Offenlegungsschriften und Patentschriften werden die folgenden Veröffentlichungen als Beispiele angeführt.

Die US-A-3 984 347 betrifft eine Zubereitung, die im wesentlichen besteht aus

1. 50 bis 98,9 Gew.-% eines Basisöls, welches ein Polyoxypropylen-Polymer oder ein Polyoxypropylen-Polyoxyethylen-Polder mit einem Molgewicht von 500 bis 6000 oder ein Siloxanglycolpolymeres der allgemeinen Formel

$$\{R_aSi(OSiMe_2)_n(OSiMeG)_bOSiMe_2G\}_{4-a}, \qquad (a)$$

$$\{R_aSi(OSiMe_2)_n(OSiMeG)_rOSiMe_3\}_{4-a}, \qquad (b)$$

$$GMe_2Si(OSiMe_2)_n(OSiMeG)_bOSiMe_2G \text{ oder} \qquad (c)$$

$$Me_3Si(OSiMe_2)_n(OSiMeG)_rOSiMe_3 \qquad (d)$$

ist, wobei

R ein Kohlenwasserstoff mit 1 bis 10 Kohlenstoffatomen, frei von olefinischen Bindungen,
Me ein Methylrest,
G ein Rest der Formel $-D(OR')_mA$, in dem D ein Alkylenrest mit 1 bis 30 Kohlenstoffatomen und R' ein Alkylenrest mit 2 bis 10 Kohlenstoffatomen ist; m einen Wert von wenigstens 1 hat; A eine verkappende Gruppe ist;
a einen Wert von 0 oder 1,
n einen Wert von wenigstens 12,
b einen Wert von o bis 50 und
c einen Wert von 1 bis 50 hat,

2. 1 bis 40 Gew.-% eines Entschäumers, welcher im wesentlichen aus

88 bis 95 Gew.-Teilen eines flüssigen Polydimethylsiloxanes mit einer Viskosität von mindestens 20 cSt bei 25°C,
5 bis 10 Gew.-Teilen Kieselsäure und
0 bis 20 Gew.-Teilen eines Siloxanharzes, welches im wesentlichen aus den Einheiten $SiO_2$ und $(CH_3)_3SiO_{1/2}$ im Verhältnis 1:0,4 bis 1:1,2, und

3. 0,1 bis 10 Gew.-% eines Dispergiermittels, welches den Bestandteil 2 im Bestandteil 1 dispergiert und ein Siloxancopolymer ist, welches entweder

i) ein Polydimethylpolysiloxan-Polyethe-Polymer ist, in den das Molekulargewicht des Polysiloxans wenigstens 2000 beträgt und das Polyoxypropylenpolymer ein Molekulargewicht von wenigstens 800 hat oder ein Polyoxyethylen-Polyoxypropylen-Polymer mit einem Molekulargewicht von 1500 ist, wobei der Polyether über eine SiC-Bindung an ein Si-Atom des Siloxans gebunden ist, oder
ii) ein Polydimethylpolysiloxan-Polyether-Polymer ist, welches durch Erhitzen einer Mischung eines Methylwasserstoffpolysiloxans mit einem Molekulargewicht von wenigstens 1500 und einem Polyoxypropylenglycol

eines Molekulargewichts von wenigstens 800 oder einem Polyoxyethylen-Polyoxypropylenglcol eines Molekulargewichtes von wenigstens 1500 erhalten worden ist.

Die veröffentlichte europäische Patentanmeldung EP-A-0 354 016 betrifft ein Textilwaschmittel, welches Waschrohstoffe, Builder und wenigstens ein Mittel zum Kontrollieren des Schaumes enthält, mit dem Kennzeichen, daß in dem Waschmittel eine dispergierbare Zubereitung eines Siliconentschäumers enthalten ist, die aus einer nichtwäßrigen Emulsion eines primären und eines sekundären Entschäumerwirkstoffes besteht, wobei der primäre entschäumende Wirkstoff ein Gemisch ist aus

a) einem flüssigen Organopolysiloxan mit wenigstens einer Hydroxyl- und Kohlenwasserstoffoxygruppe,
b) einem Siliconharz oder einer, ein Siliconharz produzierenden Verbindung,
c) einem feinteiligen Füllstoff und
d) einem Katalysator für die Reaktion von a) mit c),

und wobei der sekundäre entschäumende Wirkstoff ein Gemisch ist aus einem flüssigen Methylpolysiloxan, wenigstens einem nichtionischen Siliconsurfactant, einem ersten organischen Dispergiermittel und einem zweiten Dispergiermittel auf der Basis eines nichtionischen difunktionellen Blockcopolymers mit endbegrenzenden primären Hydroxylgruppen.

Schließlich sei noch auf die veröffentlichte europäische Patentanmeldung EP-A-0 427 263 hingewiesen. Darin wird eine Entschaumerzubereitung auf Siliconbasis beschrieben, welche (1) ein Polydiorganosiloxan, (2) Kieselsäure und (3) 4 bis 2500 Gew. - Teile, bezogen auf 100 Gew.-Teile der Summe der Komponenten (1) und (2), eines modifizierten Siliconöls enthält, dessen Molekül wenigstens eine funktionelle organische Gruppe, die an Si-Atom gebunden ist, sowie wenigstens eine Epoxy-, Amino-, Amid-, Carboxyl-, Alkoxyl- oder Hydroxylgruppe und wenigstens eine gegebenenfalls substituierte Polyoxyalkylengruppe, die an ein Si-Atom gebunden ist, aufweist.

Die EP-A-0 436 791 beschreibt unter anderem ein bevorzugtes Entschäumungsmittel, welches erhältlich ist durch

a) Vermischen von

a1) 75 bis 96 Gew.-% eines Siliconöles mit einer Viskosität 1 von 50 bis 100 000 mPas,
a2) 1 bis 5 Gew.-% eines organomodifizierten Polysiloxans der allgemeinen Formel

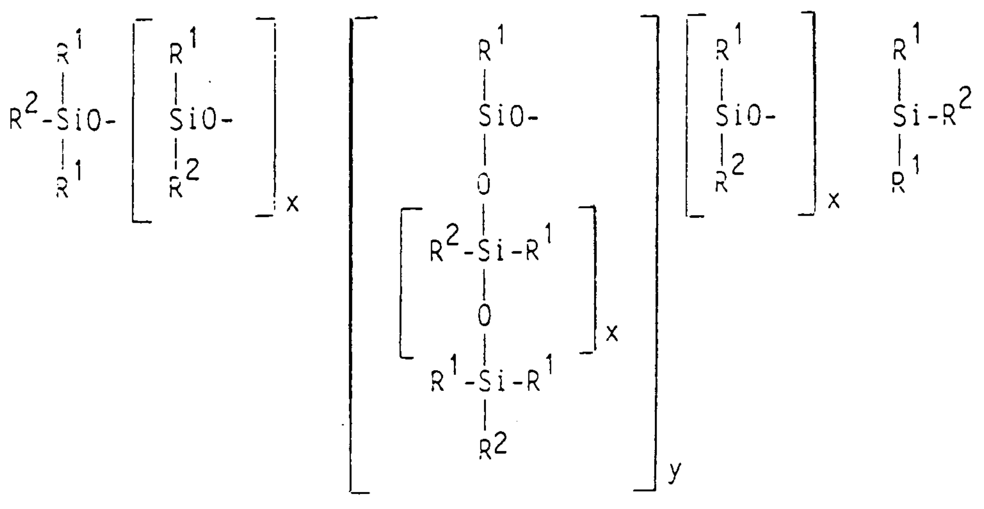

II

wobei

$R^1$ gleich Methyl sein kann,
$R^2$ gleich $R^1$ oder
$R^3(OC_nH_{2n})_m$-Z- sein kann, wobei
$R^3$ ein Wasserstoffrest oder Alkylrest mit 1 bis 8 Kohlenstoffatomen ist,
Z ein zweiwertiger Rest der Formel
$-O-(CH_2)_p-$ oder -O- oder
$-O-CH_2CH(CH_3)CH_2-$ ist,
p = 2 oder 3,
n im mittleren Molekül einen Wert von 2,8 bis 4,0 und

m einen Wert von 15 bis 100 hat,
x einen Wert von 4 bis 100 und
y einen Wert von 0 bis 10 hat,

mit der Bedingung, daß mindestens 1 Rest $R^2$ ungleich $R^1$ ist,
a3) 0 bis 5 Gew.-% eines Alkoxypolysiloxans der Formel

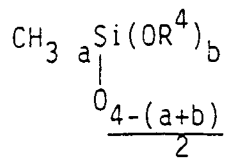

wobei

$R^4$ ein Alkylrest mit 1 bis 4 Kohlenstoffatomen ist,
a einen Wert von 1,0 bis 1,95,
b einen Wert von 0,05 bis 2,25 und
$\Sigma$ a + b einen Wert von 1,4 bis 3,25 hat,

a4) 2 bis 15 Gew.-% feinteiliger Kieselsäure, IV mit der Maßgabe, daß der Gehalt an a2) und a3) mindestens 2 Gew.-% beträgt, und

b) anschließendem Erhitzen des Gemisches auf 120 bis 220° C über eine Zeitdauer von 1 bis 10 Stunden in Gegenwart an sich bekannter alkalischer Äquilibrierungskatalysatoren.

Das Gemisch der Bestandteile a1) bis a4) wird vorzugsweise mit einem scherkraftreichen Rührer homogenisiert. Das Mittel liegt bevorzugt in Form einer wäßrigen Emulsion mit einem gehalt von 5-50 Vol% disperser Phase vor.

So vorteilhaft diese bekannten Entschäumungsmittel zur Schaumverhütung oder Schaumbeseitigung von wäßrigen Systemen eingesetzt werden können, bleiben dennoch Anforderungen, die noch nicht oder nur unvollkommen erfüllt werden können.

Eine dieser Anforderungen besteht darin, möglichst hochkonzentrierte, stabile Entschäumeremulsionen in den Handel zu bringen, die der Anwender unter Beibehaltung der Stabilität der Emulsionen auf Anwendungskonzentration verdünnen kann. Dies soll mit einfachen Rührwerkzeugen möglich sein, ohne daß eine aufwendige Rührtechnik erforderlich ist oder besondere Vorsichtsmaßnahmen beachtet werden müssen. Dabei werden hohe Anforderungen an die Stabilität der verdünnten Emulsionen gestellt. Die verdünnten Emulsionen sollen insbesondere eine hohe Stabilität bei Temperatur- und Schüttelbelastung aufweisen. Die vorliegende Erfindung hat sich die Lösung dieses technischen Problems zur Aufgabe gestellt.

Gegenstand der vorliegenden Erfindung ist deshalb eine Entschäumerstammemulsion auf der Basis organofunktionell modifizierter Polysiloxane, bestehend aus

(a) 0 bis 90 Gew.-Teilen eines Organopolysiloxans der allgemeinen Formel

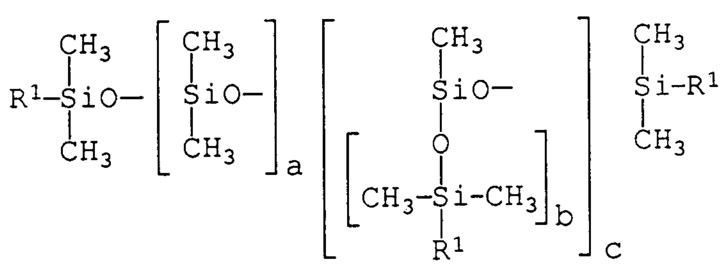

(im folgenden Formel I)

in der

$R^1$ im durchschnittlichen Molekül gleich oder verschieden sein kann und einen Alkylrest mit 1 bis 8 Kohlenstoffatomen oder den Rest $-Z-(C_nH_{2n}O-)_mR^2$ bedeutet, wobei

$R^2$ ein Wasserstoffrest oder ein Alkylrest mit 1 bis 8 Kohlenstoffatomen ist,
Z ein zweiwertiger Rest der Formel -O-, $-(CH_2)_p-O-$oder $-CH_2-CH(CH_3)-CH_2-O-$ mit p = 2 oder 3 ist,
n einen mittleren Zahlenwert von größer als 2,7 bis 4,0,
m einen mittleren Zahlenwert von 5 bis 130 hat,

a einen mittleren Zahlenwert von 4 bis 1500,
b einen mittleren Zahlenwert von 0 bis 100 und
c einen mittleren Zahlenwert von 0 bis 50 hat,

(b) 0 bis 90 Gew.-Teilen eines Organopolysiloxans der allgemeinen Formel

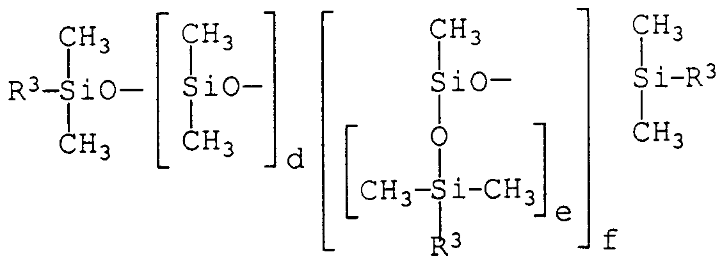

(im folgenden Formel II)

in der

$R^3$ im durchschnittlichen Molekül gleich oder verschieden sein kann und einen Hydroxylrest oder einen Alkoxyrest mit 1 bis 4 Kohlenstoffatomen bedeutet,

d einen mittleren Zahlenwert von 4 bis 1500,
e einen mittleren Zahlenwert von 0 bis 100 und
f einen mittleren Zahlenwert von 0 bis 50 hat,

(c) 0 bis 90 Gew.-Teilen eines Organopolysiloxans der allgemeinen Formel

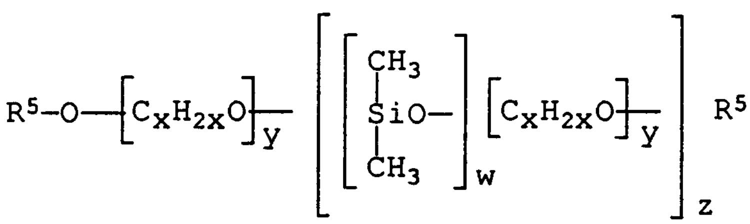

(im folgenden Formel III)

in der

$R^5$ im durchschnittlichen Molekül gleich oder verschieden sein kann und einen Alkylrest mit 1 bis 4 Kohlenstoffatomen bedeutet, jedoch mindestens 90% der Reste $R^5$ Methylreste sind,
x einen mittleren Zahlenwert von 2,6 bis 3,0,
y einen mittleren Zahlenwert von 8 bis 80,
w einen mittleren Zahlenwert von 7 bis 50 und
z einen mittleren Zahlenwert von 1,5 bis 10 hat,

wobei die Summe der Bestandteile (a), (b) und (c) mindestens 10 Gewichtsteile und höchstens 90 Gewichtsteile betragen darf,

(d) 0 bis 15 Gew.-Teilen feinstteilige Kieselsäure,

(e) 5 bis 85 Gew.-Teilen eines Organopolysiloxans der allgemeinen Formel

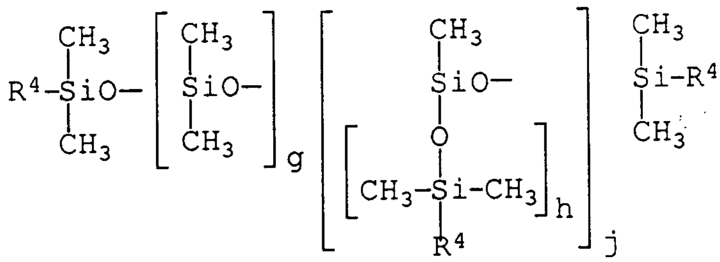

(im folgenden Formel IV)

in der

$R^4$ im durchschnittlichen Molekül gleich oder verschieden sein kann und einen Alkylrest mit 1 bis 8 Kohlenstoffatomen oder den Rest $-Z-(C_qH_{2q}O-)_rR^2$ bedeutet, wobei mindestens ein Rest $R^4$ die Bedeutung des Restes $-Z-(C_qH_{2q}O-)_rR^2$ hat,

$R^2$ und Z die bereits angegebene Bedeutung haben,
q einen mittleren Zahlenwert von 2,0 bis 2,7,
r einen mittleren Zahlenwert von 5 bis 120 hat,
g einen mittleren Zahlenwert von 4 bis 200,
h einen mittleren Zahlenwert von 0 bis 100 und
j einen mittleren Zahlenwert von 0 bis 50 hat,

(f) 5 bis 50 Gew.-Teilen Wasser, und gegebenenfalls einem alkalischen Äquilibrierungskatalysator, erhältlich durch Einrühren einer Mischung der Komponenten (a) bis (d) in eine Mischung der Komponenten (e) und (f) mittels eines scherkraftarmen Rührers.

In der Formel I hat $R^1$ vorzugsweise die Bedeutung eines Methylrestes oder eines Polyetherrestes, bei dem Z -O- oder $-(CH_2)_3-O-$, ist. Es resultiert für den Polyetherrest dann die Formel $-(CH_2)_3-O(C_nH_{2n}O-)_mR^2$.

n hat einen mittleren Zahlenwert von größer als 2,7 bis 4,0, wobei ein Zahlenwert von 2,8 bis 3 bevorzugt ist. Dieser mittlere Zahlenwert ergibt sich bei der Herstellung des Polyethers durch blockweise oder statistische Anlagerung entsprechenden Mengen Ethylenoxid und Propylenoxid, wobei auch gegebenenfalls höhere Alkylenoxide eingesetzt werden können.

m hat einen mittleren Zahlenwert von 5 bis 130 und gibt die mittlere Anzahl der Oxyalkyleneinheiten im Polyetherest an. Bevorzugt ist für m ein mittlerer Zahlenwert von 6 bis 50.

$R^2$ ist ein Wasserstoffrest oder ein Alkylrest mit 1 bis 8 Kohlenstoffatomen. Besonders bevorzugt ist ein Alkylrest mit 1 bis 5 Kohlenstoffatomen, insbesondere der Butylrest.

Die Indices a, b und c haben vorzugsweise folgende Werte: a = 4 bis 800, b = 0 bis 50, c = 0 bis 30.

Die zweite Polysiloxankomponente entspricht der allgemeinen Formel II. In diesem Polysiloxan hat $R^3$ die Bedeutung eines Hydroxyl- oder eines niederen Alkoxyrestes mit 1 bis 4 Kohlenstoffatomen. Bevorzugt ist der Hydroxylrest, wobei der Alkoxyrest als unter Hydrolysebedingungen in den Hydroxylrest umwandelbarer Precursor anzusehen ist.

Die Werte von d, e und f sind zwar unabhängig von den Indices a, b und c anzusehen, sie entsprechen sich aber im angegebenen und bevorzugten Bereich, müssen aber nicht in beiden Formel identisch sein.

Die dritte Polysiloxankomponente entspricht der allgemeinen Formel III. In diesem Polysiloxan hat $R^5$ die Bedeutung eines Alkylrestes mit 1 bis 4 Kohlenstoffatomen, wobei jedoch mindestens 90% der Reste $R^5$ Methylreste sind. die Indices haben die folgende mittlere Bedeutung:

x = 2,6 bis 30, vorzugsweise 2,8 bis 3,0
y = 8 bis 80, vorzugsweise 20 bis 60
w = 7 bis 50, vorzugsweise 13 bis 30
z = 1,5 bis 10, vorzugsweise 1,5 bis 5.

In der erfindungsgemäßen Entschäumeremulsion können die Polysiloxane der Formel I, II und III in einer Menge von jeweils 0 bis 90 Gew.-Teilen vorliegen. Es muß jedoch die Bedingung erfüllt sein, daß die Summe der drei Polysiloxane mindestens 10 Gew.-Teile betragen muß. aber 90 Gew.-Teile nicht überschreiten darf. Es sind also beispielsweise folgende Kombinationen ( neben anderen Kombinationen) möglich:

| Siloxantyp | Gewichtsteile | | | | |
|---|---|---|---|---|---|
| Siloxan I | 90 | 0 | 0 | 30 | 20 |
| Siloxan II | 0 | 90 | 0 | 30 | 45 |
| Siloxan III | 0 | 0 | 90 | 30 | 25 |

Die Komponente d ist feinteilige Kieselsäure, die in Entschäumeremulsionen üblicherweise als wirkungsverstärkende Substanz eingesetzt wird. Im allgemeinen verwendet man pyrogen erzeugte Kieselsäure, die durch Behandlung mit Silanen auch hydrophobiert sein kann. Bevorzugt verwendet man Mengen von 0,2 bis 5 Gew.-Teilen.

Als Polysiloxan e mit der allgemeinen Formel IV verwendet man vorzugsweise Siloxane, bei denen die Reste $R^4$ einen Alkylrest mit 1 bis 4 Kohlenstoffatomen bedeuten bzw. Reste der Formel $-(CH_2)_3-O-(C_qH_{2q}O-)_2H$ sind. Zum Unterschied zu den Polyethersiloxanen der Formel I ist der Polyetherrest der Polyethersiloxane e hydrophiler, d.h. der mittlere Wert von q ist mit dem Bereich 2,0 bis 2,7 niedriger als der der Siloxane I. Dies wird durch einen höheren Anteil an Ethylenoxid bei der Herstellung des Polyethers bewirkt. Besonders bevorzugt ist ein Bereich von 2,3 bis 2,6.

Aus den Werten der Indices g, h und j ist ersichtlich, daß die Polysiloxane der Formel IV ein niedrigeres Molekulargewicht als die Polysiloxane der Formel I aufweisen können. Bevorzugt sind für die Indices folgende mittleren Zahlenwerte: g = 4 bis 100, h = 0 bis 20, und j = 0 bis 25.

Die erfindungsgemäße Entschäumerstammemulsion ist dadurch erhältlich, daß man die Bestandteile (a) = Siloxan I, (b) = Siloxan II, (c) = Polysiloxan III und (d) Kieselsäure miteinander vermischt und in die Mischung der Bestandteile (e) = Polysiloxan der Formel IV und (f) Wasser mittels eines scherkraftarmen Rührers einrührt.

Bevorzugt ist eine Verfahrensweise, bei der man die Komponenten (a), (b), (c) und (d) > 0 zunächst in Gegenwart eines alkalischen Äquilibrierungskatalysators 0,5 bis 10 Stunden bei 50 bis 200°C erhitzt. Als alkalischen Äquilibrierungskatalysator verwendet man bevorzugt eine wirksame Menge, etwa 0,5 bis 2 Gew.-Teile, einer alkoholischen Lösung eines Alkali- oder Ammoniumhydroxydes oder -carbonates, z.B. eine ethanolische Lösung von KOH.

Vorzugsweise äquilibriert man 3 bis 6 Stunden bei 90 bis 150°C. Man kann unterstellen, daß bei dieser Reaktion auch Reaktionen der Polysiloxane mit reaktiven Zentren an der Oberfläche der feinteiligen Kieselsäure reagieren.

Das so erhaltene Gemisch wird nun mit der Mischung der Komponenten (e) und (f) zu einer Stammemulsion emulgiert. Diese kann dann sofort oder zu einem späteren Zeitpunkt, gegebenenfalls am Ort der Anwendung auf Gebrauchskonzentration verdünnt werden. Die Gebrauchskonzentration beträgt im allgemeinen 5 bis 20 Gew.-% an disperser Phase.

Die erfindungsgemäße verdünnbare Stammemulsion ist trotz des niedrigen Wassergehaltes dünnflüssig und läßt sich in beliebiger Weise, etwa durch einfaches Einrühren von Wasser, in die gewünschte verdünnte Gebrauchsemulsionemulsion überführen. gegenstand der Erfindung sind auch verdünnte gebrauchsemulsionen nach Anspruch 3.

Es hat sich nämlich gezeigt, daß die Stabilität der verdünnten Emulsionen noch dadurch gesteigert werden kann, wenn man die Stammemulsion mit Wasser verdünnt, welches ein Stabilisierungs- und/oder Verdickungsmittel enthält. Besonders bevorzugt sind dabei Stabilisierungs- und/oder Verdickungsmittel auf Basis eines Carboxylgruppen enthaltenden Polyacrylates. Dabei wird der pH-Wert der wäßrigen Lösung auf etwa pH 7 eingestellt.

Derartige Produkte sind im Handel erhältlich und z.B. in der DE-A-39 25 220 beschrieben.

Die erfindungsgemäß erhaltenen Stammemulsionen und die erfindungsgemäßen, auf Anwendungskonzentration verdünnten Emulsionen zeigen die geforderte Temperatur- und Schüttelbelastbarkeit, wie dies in den folgenden Beispielen gezeigt wird.

Beispiel 1

31 Gew.-Teile eines Siloxans der Formel I ( a = 80, c = 7, b = 0 und $R^1 = CH_3$- und $-Z-(C_nH_{2n}O-)_mR^2$ im Verhältnis 2 : 7, wobei $Z = -(CH_2)_p-O-$ mit p = 3 und n = 2,9 ; m = 15 ; $R^2$ = -H) werden mit 5 Gew.-Teilen eines Siloxans der Formel II (d = 300, f = 0 und $R^3$ = -OH) vermischt und mit 2 Gew.-Teile einer feindispersen Kieselsäure versetzt. Die so erhaltene Mischung wird nach Zusatz von 0,5 Gew.-Teilen einer 10%igen methanolischen KOH 3 Stunden lang auf 100° C erhitzt.

37 Gew.-Teile des geheizten Produktes werden in eine Mischung aus 30 Gew.-Teilen eines Siloxans der Formel IV ( g = 18, h = 6, j = 2 und $R^4 = -Z-(C_qH_{2q}O)_rR^2$ mit Z = -O- , $R^2 = C_3H_7$- und q = 2,6; r = 40) und 33 Gew.-Teilen Wasser gegeben und mit einem scherkraftarmen Rührer verrührt.

Beispiel 2

20 Gew.-Teile eines Siloxans der Formel I ( a = 18, b = 6, c = 2 und $R^1$ = $-Z-(C_nH_{2n}O)_m-R^2$ mit $R^2$ = $C_3H_7$- und n = 3, m = 33) werden mit 20 Gew.-Teilen eines Siloxans der Formel III (x = 3,0 ; y = 51 ; w = 15 ; z = 4) vermischt. Dieses Gemisch wird in eine Mischung aus 20 Gew.-Teilen eines Siloxans der Formel IV ( g = 48, h = 0, j = 2 und $R^4$ = $-Z-(C_qH_{2q}O)_rR^2$ mit Z = $-(CH_2)_p-O-$; p = 3; $R^2$ = H- und q = 2,6; r = 40) und 40 Gew.-Teilen Wasser gegeben und scherkraftarm miteinander verrührt.

Beispiel 3

60 Gew.-Teile eines Siloxans der Formel III ( x = 2,8; y = 20; w = 25 und z = 2) werden in eine Mischung aus 25 Gew.-Teilen eines Siloxans der Formel IV ( g = 21; h = 7; j = 2 und $R^4$ = $-Z-(C_qH_{2q}O)_rR^2$ mit Z = -O-; $R^2$ = $C_3H_7$- und q = 2,6; r = 40) und 15 Gew.-Teilen Wasser eingerührt.

Beispiel 4

38 Gew.-Teile eines Siloxans der Formel II ( d = 70; e = 10; f = 6; $R^3$ = $-OC_2H_5$) werden mit 2 Gew.-Teilen einer feindispersen Kieselsäure versetzt. Dieses Gemisch wird in eine Mischung aus 30 Gew.-Teilen eines Siloxans der Formel IV ( g = 60; h = 0; j = 4 und $R^4$ = $-Z-(C_qH_{2q}O)_rR^2$ mit Z = - $CH_2-CH(CH_3)CH_2-0-$; $R^2$ = $CH_3$-; q = 2,5 und r = 40) und 30 Gew.-Teilen Wasser scherkraftarm eingerührt.

Beispiel 5

38 Gew.-Teile eines Siloxans der Formel I ( a = 500, c = 0 und $R^1$ = $CH_3$- ) werden mit 2 Gew.-Teilen einer feindispersen Kieselsäure versetzt und in eine Mischung aus 30 Gew.-Teilen eines Siloxans der Formel IV ( g = 18; h = 6; j = 2 und $R^4$ = $-Z-(C_qH_{2q}O)_rR^2$ mit Z = -O-; $R^2$ = $C_3H_7$- und q = 2,6; r = 40 ) und 30 Gew.- Teilen Wasser scherkraftarm eingerührt.

Beispiel 6

80,1 Gew.-Teile Wasser werden in einem Rührgefäß vorgelegt. 2,5 Gew.-Teile einer 30 %igen Dispersion eines Verdickungsmittels auf Basis eines Carboxylgruppen enthaltenden Polyacrylates ( im Handel z.B. erhältlich unter der Bezeichnung Acrysol RM-5 ) werden dazu gegeben. Danach erfolgt die Zugabe von 14,9 Gew.-Teilen der Emulsion nach Beispiel 1. Diese Mischung wird nun mit einem MIG-Rührer (Mehrimpulsgegenstromrührer), bei einer Umfangsgeschwindigkeit von 3 m/s, 5 Minuten lang verrührt. Danach wird der pH-Wert dieser Emulsion mit 2,5 Gew.-Teilen einer 5,6 %igen NaOH auf 7 eingestellt.

Beispiel 7

78,3 Gew.-Teile Wasser werden in einem Rührgefäß vorgelegt. 2,5 Gew.-Teile einer 30 %igen Dispersion eines Verdickungsmittels auf Basis eines Carboxylgruppen enthaltenden Polyacrylates ( im Handel z.B. erhältlich unter der Bezeichnung Acrysol RM-5 ) werden dazu gegeben. Danach erfolgt die Zugabe von 16,7 Gew.-Teilen der Emulsion nach Beispiel 2. Diese Mischung wird nun mit einem MIG-Rührer (Mehrimpulsgegenstromrührer), bei einer Umfangsgeschwindigkeit von 3 m/s, 5 Minuten lang verrührt. Danach wird der pH-Wert dieser Emulsion mit 2,5 Gew.-Teilen einer 5,6 %igen NaOH auf 7 eingestellt.

Beispiel 8

83,2 Gew.-Teile Wasser werden in einem Rührgefäß vorgelegt. 2,5 Gew.-Teile einer 30 %igen Dispersion eines Verdickungsmittels auf Basis eines Carboxylgruppen enthaltenden Polyacrylates ( im Handel z.B. erhältlich unter der Bezeichnung Acrysol RM-5 ) werden dazu gegeben. Danach erfolgt die Zugabe von 11,8 Gew.-Teilen der Emulsion nach Beispiel 3. Diese Mischung wird nun mit einem MIG-Rührer (Mehrimpulsgegenstromrührer), bei einer Umfangsgeschwindigkeit von 3 m/s, 5 Minuten lang verrührt. Danach wird der pH-Wert dieser Emulsion mit 2,5 Gew.-Teilen einer 5,6 %igen NaOH auf 7 eingestellt.

Beispiel 9

80,1 Gew.-Teile Wasser werden in einem Rührgefäß vorgelegt. 2,5 Gew.-Teile einer 30 %igen Dispersion eines Verdickungsmittels auf Basis eines Carboxylgruppen enthaltenden Polyacrylates ( im Handel z.B. erhältlich unter der

Bezeichnung Acrysol RM-5) werden dazu gegeben. Danach erfolgt die Zugabe von 14,9 Gew.-Teilen der Emulsion nach Beispiel 4. Diese Mischung wird nun mit einem MIG-Rührer (Mehrimpulsgegenstromrührer), bei einer Umfangsgeschwindigkeit von 3 m/s, 5 Minuten lang verrührt. Danach wird der pH-Wert dieser Emulsion mit 2,5 Gew.-Teilen einer 5,6%igen NaOH auf 7 eingestellt.

Beispiel 10

80,7 Gew.-Teile Wasser werden in einem Rührgefäß vorgelegt. 2,5 Gew.-Teile einer 30%igen Dispersion eines Verdickungsmittels auf Basis eines Carboxylgruppen enthaltenden Polyacrylates ( im Handel z.B. erhältlich unter der Bezeichnung Acrysol RM-5) werden dazu gegeben. Danach erfolgt die Zugabe von 14,3 Gew.-Teilen der Emulsion nach Beispiel 5. Diese Mischung wird nun mit einem MIG-Rührer (Mehrimpulsgegenstromrührer), bei einer Umfangsgeschwindigkeit von 3 m/s, 5 Minuten lang verrührt. Danach wird der pH-Wert dieser Emulsion mit 2,5 Gew.-Teilen einer 5,6%igen NaOH auf 7 eingestellt.

Beispiel 11

78,3 Gew.-Teile Wasser werden in einem Rührgefäß vorgelegt. 2,5 Gew.-Teile einer 30% igen Dispersion eines Verdickungsmittels auf Basis eines Carboxylgruppen enthaltenden Polyacrylates ( im Handel z.B. erhältlich unter der Bezeichnung Acrysol RM-5) werden dazu gegeben. Danach erfolgt die Zugabe von 16,7 Gew.-Teilen der Emulsion nach Beispiel 2. Diese Mischung wird nun mit einer Turbine bei einer Umfangsgeschwindigkeit von 5 m/s, 5 Minuten lang verrührt. Danach wird der pH-Wert dieser Emulsion mit 2,5 Gew.-Teilen einer 5,6%igen NaOH auf 7 eingestellt.

Beispiel 12

78,3 Gew.-Teile Wasser werden in einem Rührgefäß vorgelegt. 2,5 Gew.-Teile einer 30% igen Dispersion eines Verdickungs-mittels auf Basis eines Carboxylgruppen enthaltenden Polyacry-lates ( im Handel z.B. erhältlich unter der Bezeichnung Acrysol RM-5) werden dazu gegeben. Danach erfolgt die Zugabe von 16,7 Gew.-Teilen der Emulsion nach Beispiel 2. Diese Mischung wird nun mit einer Dissolverscheibe bei einer Umfangsgeschwindigkeit von 7 m/s, 5 Minuten lang verrührt. Danach wird der pH-Wert dieser Emulsion mit 2,5 Gew.-Teilen einer 5,6%igen NaOH auf 7 eingestellt.

Beispiel 13

87,3 Gew.-Teile Wasser werden in einem Rührgefäß vorgelegt. 2,5 Gew.-Teile einer 30% igen Dispersion eines Verdickungs-mittels auf Basis eines Carboxylgruppen enthaltenden Polyacry-lates ( im Handel z.B. erhältlich unter der Bezeichnung Acrysol RM-5) werden dazu gegeben. Danach erfolgt die Zugabe von 16,7 Gew.-Teilen der Emulsion nach Beispiel 2. Diese Mischung wird nun mit einem Spatel 5 Minuten lang verrührt. Danach wird der pH-Wert dieser Emulsion mit 2,5 Gew.-Teilen einer 5,6%igen NaOH auf 7 eingestellt.

a) Wärmestabilität

Zur Ermittlung der Wärmestabilität wurden die Emulsionen nach Beispiel 1 bis 13 in einer 250 ml - Glasflasche bei 60° C im Wärmeschrank gelagert und alle 8 Stunden begutachtet. Es wird die Zeit notiert nach welcher noch keine Destabilisierung der Emulsion feststellbar war.

b) Schüttelstabilität

Die Schüttelstabilität wird ermittelt, indem man 100ml-Glasflaschen mit 80 ml der zu prüfenden Emulsion füllt und diese auf einer Schüttelmaschine ( Schüttelfrequenz = 240 $min^{-1}$ Auslenkung = 3 cm ) schüttelt. Die Emulsionen werden stündlich auf Destabilisierung hin begutachtet. Emulsionen mit Schüttelstabilitäten unter 2 Stunden können während des Transportes geschädigt werden, weshalb längere Schüttelstabilitäten erstrebenswert sind.

Die Wärmestabilität der Emulsionen nach Beispiel 1 bis 13 war größer als 150 Stunden.

Die Schüttelstabilität der Emulsionen nach Beispiel 1 bis 13 war größer als 8 Stunden.

Die Entschäumung der, mit unterschiedlichen Umfangsgeschwindigkeiten aus der Emulsion nach Beispiel 2, hergestellten verdünnten Emulsionen Beispiel 7 und Beispiel 11 bis 13 wurden in der entschäumenden Wirkung überprüft um die Unabhängigkeit der Entschäumung vom Verdünnungsmodus aufzuzeigen.

Prüfmethode:

Dilexo AM 15 (Reinacrylatdispersion der Fa. DEA) wird mit Wasser in einem Verhältnis 8:2 gemischt (Dispersion I). 100 g Dispersion I werden in ein 250ml-Becherglas gegeben und auf 20o C temperiert. Danach werden 1% der zu prüfenden Entschäumeremulsion dazugegeben. Diese Mischung wird mit einer Turbine, deren Durchmesser 4 cm beträgt und die derart in einem Rührer eingespannt ist, daß sie sich 0,5 cm über dem Becherglasboden befindet, 1 Minute bei 2500 U/min gerührt. Direkt nach dem Rühren werden 50 ml der gerührten Dispersion I in einen tarierten 50 ml - Meßkolben gegeben und zurückgewogen.

Aus der Auswaage A und der Dichte der ungerührten Dispersion $\sigma_D$ (1,02 g/ml) kann, nach nachstehender Gleichung, die eingerührte Luft als Vol.% berechnet werden:

$$\text{Volumen\% Luft} = 100 - \frac{A * 2}{\sigma D}$$

| Entschäumer | A (g/50ml) | Vol% Luft |
|---|---|---|
| ohne | 36,4 | 28,6 |
| Beispiel 7 | 46,4 | 9,0 |
| Beispiel 11 | 46,5 | 8,8 |
| Beispiel 12 | 46,3 | 9,2 |
| Beispiel 13 | 46,7 | 8,4 |

**Patentansprüche**

1. Entschäumerstammemulsion auf der Basis organofunktionell modifizierter Polysiloxane, bestehend aus

(a) 0 bis 90 Gew.-Teilen eines Organopolysiloxans der allgemeinen Formel

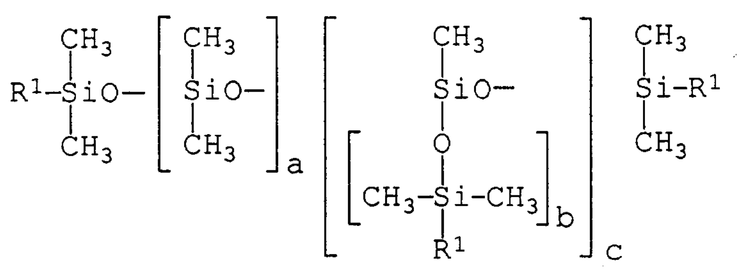

in der

- $R^1$ im durchschnittlichen Molekül gleich oder verschieden sein kann und einen Alkylrest mit 1 bis 8 Kohlenstoffatomen oder den Rest $-Z-(C_nH_{2n}-O-)_mR^2$ bedeutet, wobei
- $R^2$ ein Wasserstoffrest oder ein Alkylrest mit 1 bis 8 Kohlenstoffatomen ist,
- Z ein zweiwertiger Rest der Formel -O-, $-(CH_2)_p-O-$ oder $-CH_2-CH(CH_3)-CH_2-O-$ mit p = 2 oder 3 ist,
- n einen mittleren Zahlenwert von größer als 2,7 bis 4,0,
- m einen mittleren Zahlenwert von 5 bis 130 hat,
- a einen mittleren Zahlenwert von 4 bis 1500,
- b einen mittleren Zahlenwert von 0 bis 100 und
- c einen mittleren Zahlenwert von 0 bis 50 hat,

(b) 0 bis 90 Gew.-Teilen eines Organopolysiloxans der allgemeinen Formel

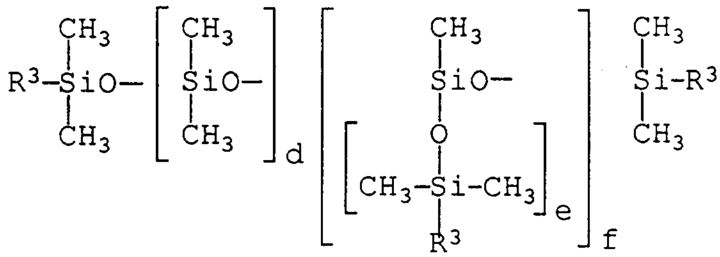

in der

- $R^3$ im durchschnittlichen Molekül gleich oder verschieden sein kann und einen Hydroxylrest oder einen Alkoxyrest mit 1 bis 4 Kohlenstoffatomen bedeutet,
- d einen mittleren Zahlenwert von 4 bis 1500,
- e einen mittleren Zahlenwert von 0 bis 100 und
- f einen mittleren Zahlenwert von 0 bis 50 hat,

(c) 0 bis 90 Gew.-Teilen eines Organopolysiloxans der allgemeinen Formel

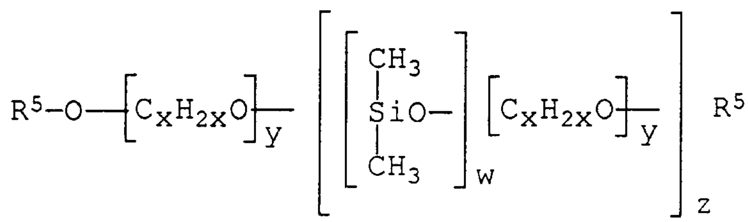

in der

- $R^5$ im durchschnittlichen Molekül gleich oder verschieden sein kann und einen Alkylrest mit 1 bis 4 Kohlenstoffatomen bedeutet, jedoch mindestens 90% der Reste $R^5$ Methylreste sind,
- x einen mittleren Zahlenwert von 2,6 bis 3,0,
- y einen mittleren Zahlenwert von 8 bis 80,
- w einen mittleren Zahlenwert von 7 bis 50 und
- z einen mittleren Zahlenwert von 1,5 bis 10 hat,

wobei die Summe der Bestandteile (a), (b) und (c) mindestens 10 Gewichtsteile und höchstens 90 Gewichtsteile betragen darf,

(d) 0 bis 15 Gew.-Teilen feinstteilige Kieselsäure,

(e) 5 bis 85 Gew.-Teilen eines Organopolysiloxans der allgemeinen Formel

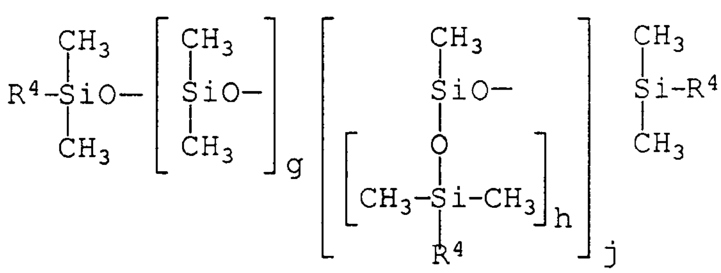

in der

$R^4$ im durchschnittlichen Molekül gleich oder verschieden sein kann und einen Alkylrest mit 1 bis 8 Kohlenstoffatomen oder den Rest $-Z-(C_qH_{2q}-O-)_rR^2$ bedeutet, wobei mindestens ein Rest $R^4$ die Bedeutung des Restes $-Z-(C_qH_{2q}-O-)_rR^2$ hat,
$R^2$ und Z die bereits angegebene Bedeutung haben,
q einen mittleren Zahlenwert von 2,0 bis 2,7,
r einen mittleren Zahlenwert von 5 bis 120 hat,
g einen mittleren Zahlenwert von 4 bis 200,
h einen mittleren Zahlenwert von 0 bis 100 und
j einen mittleren Zahlenwert von 0 bis 50 hat,

(f) 5 bis 50 Gew.-Teilen Wasser, und gegebenenfalls einem alkalischen Äquilibrierungskatalysator, erhältlich durch Einrühren einer Mischung der Komponenten (a) bis (d) in eine Mischung der Komponenten (e) und (f) mittels eines scherkraftarmen Rührers.

**2.** Entschäumerstammemulsion nach Anspruch 1, dadurch erhältlich, daß man die Komponenten (a), (b), (c) und (d) > 0 zunächst in Gegenwart eines alkalischen Äquilibrierungskatalysators 0,5 bis 10 Stunden bei 50 bis 200°C erhitzt und dann in die Mischung der Komponenten (e) und (f) einrührt.

**3.** Entschäumergebrauchsemulsion erhältlich durch Verdünnung der Stammemulsion nach Anspruch 1 oder 2, bestehend aus den Komponenten (a) bis (f), gegebenenfalls einem alkalischen Äquilibrierungskatalysator, zusätzlichem Wasser und einem stabilisierend wirkenden Verdickungsmittel auf Basis eines Carboxylgruppen enthaltenden Polyacrylates, wobei der pH-Wert der wäßrigen Phase der Emulsion auf etwa pH 7 eingestellt ist.

## Claims

**1.** Anti-foaming composition parent emulsion based on organofunctionally modified polysiloxanes, comprising

(a) from 0 to 90 parts by weight of an organopolysiloxane of the general formula

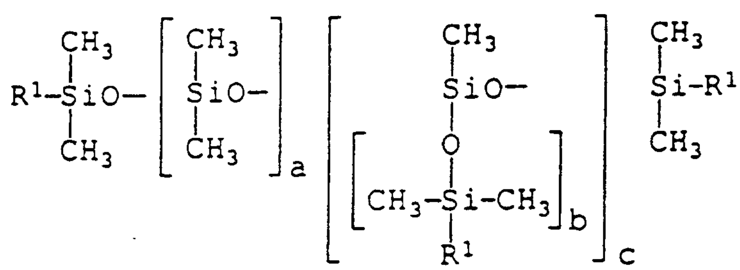

in which

$R^1$ in the average molecule may be identical or different and represents an alkyl radical having from 1 to 8 carbon atoms or the radical $-Z-(C_nH_{2n}O-)_mR^2$, wherein
$R^2$ is a hydrogen radical or an alkyl radical having from 1 to 8 carbon atoms,
Z is a divalent radical of the formula -O-, $-(CH_2)_p-O-$ or $-CH_2-CH(CH_3)-CH_2-O-$with p = 2 or 3,
n has an average numerical value of greater than 2.7 to 4.0,
m has an average numerical value of from 5 to 130,
a has an average numerical value of from 4 to 1500,
b has an average numerical value of from 0 to 100 and
c has an average numerical value of from 0 to 50,

(b) from 0 to 90 parts by weight of an organopolysiloxane of the general formula

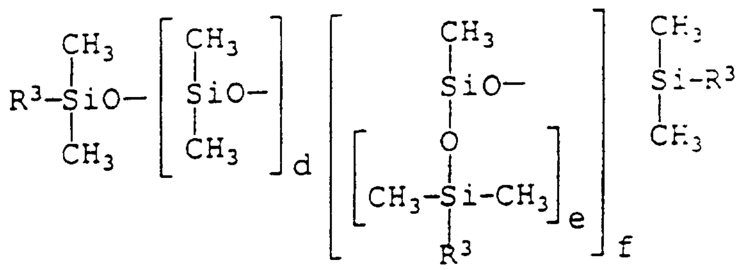

in which

$R^3$ in the average molecule may be identical or different and represents a hydroxyl radical or an alkoxy radical having from 1 to 4 carbon atoms,
d has an average numerical value of from 4 to 1500,
e has an average numerical value of from 0 to 100 and
f has an average numerical value of from 0 to 50,

(c) from 0 to 90 parts by weight of an organopolysiloxane of the general formula

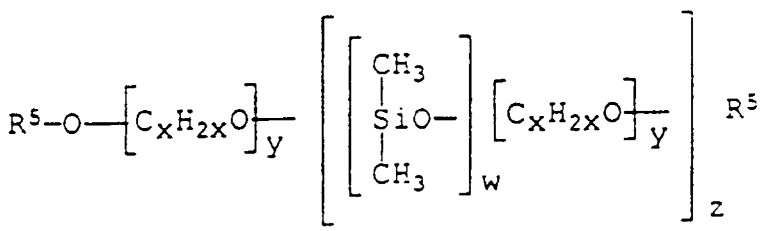

in which

$R^5$ in the average molecule may be identical or different and represents an alkyl radical having from 1 to 4 carbon atoms, at least 90% of the radicals $R^5$ being methyl radicals, however,
x has an average numerical value of from 2.6 to 3.0,
y has an average numerical value of from 8 to 80,
w has an average numerical value of from 7 to 50 and
z has an average numerical value of from 1.5 to 10,

the sum of the components (a), (b) and (c) being constrained to lie in the range from 10 parts by weight and 90 parts by weight,
(d) from 0 to 15 parts by weight of very finely disperse silicic acid,
(e) from 5 to 85 parts by weight of an organopolysiloxane of the general formula

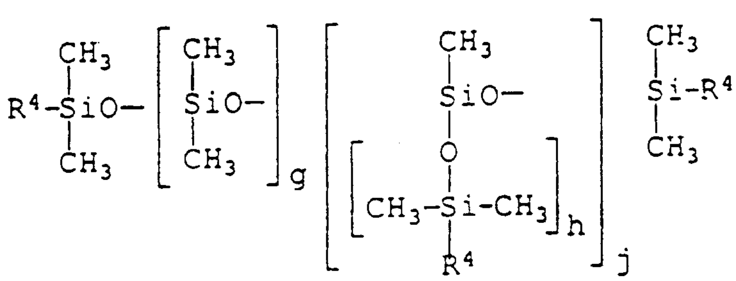

in which

$R^4$ in the average molecule may be identical or different and represents an alkyl radical having from 1

to 8 carbon atoms or the radical $-Z-(C_qH_{2q}O-)_rR^2$, at least one radical $R^4$ having the meaning of the radical $-Z-(C_qH_{2q}O-)_rR^2$,

- $R^2$ and Z have the previously specified meaning,
- q has an average numerical value of from 2.0 to 2.7,
- r has an average numerical value of from 5 to 120,
- g has an average numerical value of from 4 to 200,
- h has an average numerical value of from 0 to 100 and
- j has an average numerical value of from 0 to 50,

(f) from 5 to 50 parts by weight of water and optionally an alkaline equilibration catalyst,

obtainable by stirring a mixture of the components (a) to (d) into a mixture of the components (e) and (f) by means of a low-shear agitator.

2. Anti-foaming composition parent emulsion according to Claim 1, which can be obtained by the components (a), (b), (c) and (d) > 0 first being heated in the presence of an alkaline equilibration catalyst from 0.5 to 10 hours at from 50 to 200°C and then being stirred into the mixture of the components (e) and (f).

3. Anti-foaming composition working emulsion obtainable by dilution of the parent emulsion according to Claim 1 or 2, comprising the components (a) to (f), optionally an alkaline equilibration catalyst, additional water and a thickener which has a stabilizing effect and is based on a polyacrylate containing carboxyl groups, the pH of the aqueous phase of the emulsion having been set to a pH of about 7.

## Revendications

1. Emulsion mère antimousse à base de polysiloxanes modifiés avec des groupes organofonctionnels, formée de :

(a) 0 à 90 parties en poids d'un organopolysiloxane répondant à la formule générale

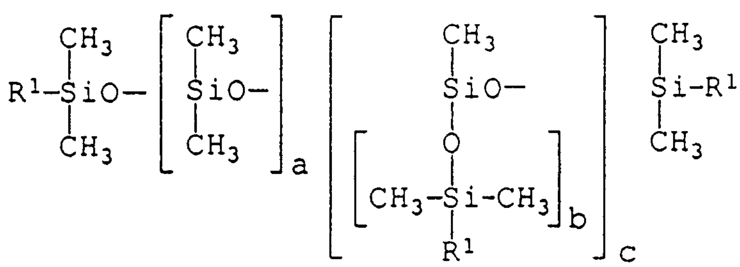

où

- $R^1$ peuvent être identiques ou différents dans la molécule moyenne et signifient un reste alkyle ayant de 1 à 8 atomes de carbone ou le reste $-Z-(C_nH_{2n}O-)_mR^2$, où
- $R^2$ est un reste d'hydrogène ou un reste alkyle ayant de 1 à 8 atomes de carbone,
- Z est un reste bivalent répondant à la formule -O-, $-(CH_2)_p-O-$ ou $-CH_2CH(CH_3)-CH_2-O-$ avec p = 2 ou 3,
- n a une valeur numérique moyenne supérieure à 2,7 et allant jusqu'à 4,0,
- m a une valeur numérique moyenne de 5 à 130,
- a a une valeur numérique moyenne de 4 à 1 500,
- b a une valeur numérique moyenne de 0 à 100, et
- c a une valeur numérique moyenne de 0 à 50,

(b) 0 à 90 parties en poids d'un organopolysiloxane répondant à la formule générale

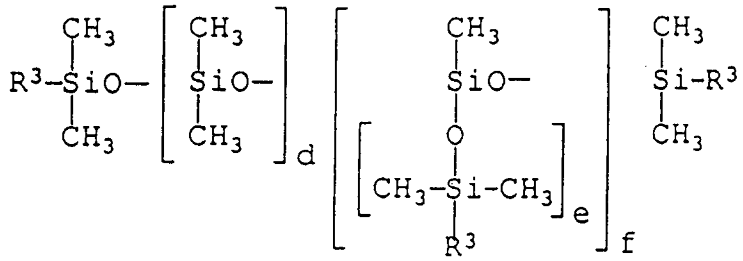

où

- $R^3$ peuvent être identiques ou différents dans la molécule moyenne et signifient un reste hydroxyle ou un reste alcoxy ayant de 1 à 4 atomes de carbone,
- d a une valeur numérique moyenne de 4 à 1 500,
- e a une valeur numérique moyenne de 0 à 100, et
- f a une valeur numérique moyenne de 0 à 50,

(c) 0 à 90 parties en poids d'un organopolysiloxane répondant à la formule générale

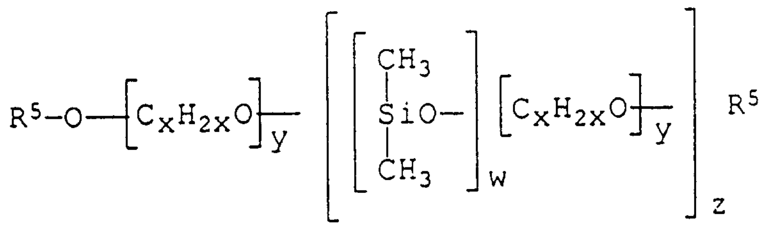

où

- $R^5$ peuvent être identiques ou différents dans la molécule moyenne et signifient un reste alkyle ayant de 1 à 4 atomes de carbone, au moins 90 % des restes $R^5$ signifiant toutefois le reste méthyle,
- x a une valeur numérique moyenne de 2,6 à 3,0,
- y a une valeur numérique moyenne de 8 à 80,
- w a une valeur numérique moyenne de 7 à 50, et
- z a une valeur numérique moyenne de 1,5 à 10,

la somme des composants (a), (b) et (c) pouvant valoir au moins 10 parties en poids et au plus 90 parties en poids.
(d) 0 à 15 parties en poids d'acide silicique finement divisé,
(e) 5 à 85 parties en poids d'un organopolysiloxane répondant à la formule générale

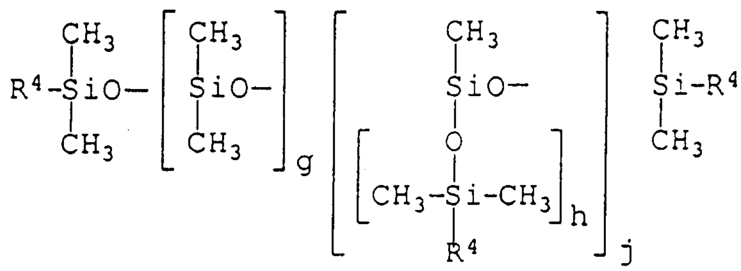

où

- $R^4$ peuvent être identiques ou différents dans la molécule moyenne et signifient un reste alkyle ayant de 1 à 8 atomes de carbone ou le reste $-Z-(C_qH_{2q}O-)_rR^2$, au moins un reste $R^4$ ayant la signification du reste

$-Z-(C_qH_{2q}O-)_rR^2$,

$R^2$ et Z ont les significations déjà indiquées,
q a une valeur numérique moyenne de 2,0 à 2,7,
r a une valeur numérique moyenne de 5 à 120,
g a une valeur numérique moyenne de 4 à 200,
h a une valeur numérique moyenne de 0 à 100, et
j a une valeur numérique moyenne de 0 à 50,

(f) 5 à 50 parties en poids d'eau, et éventuellement de catalyseur alcalin d'équilibre,

qu'on peut obtenir en délayant un mélange des composants (a) à (d) dans un mélange des composants (e) et (f) au moyen d'un agitateur à faible force de cisaillement.

**2.** Emulsion mère antimousse selon la revendication 1, qu'on peut obtenir d'abord en chauffant les composants (a), (b), (c) et (d) > 0, à une température de 50 à 200°C, pendant 0,5 à 10 heures, en présence d'un catalyseur alcalin d'équilibre, et ensuite, en délayant ce mélange dans le mélange des composants (e) et (f).

**3.** Emulsion antimousse prête à l'emploi, qu'on peut obtenir en diluant l'émulsion mère selon la revendication 1 ou 2, formée des composants (a) à (f), éventuellement d'un catalyseur alcalin d'équilibre, d'une quantité d'eau supplémentaire et d un agent épaississant ayant un effet stabilisant, à base d'un polyacrylate contenant des groupes carboxyles, la valeur de pH de la phase aqueuse de l'émulsion étant ajustée à environ pH 7.